# EUROPÄISCHE PATENTSCHRIFT

(11) **EP 0 780 053 B1**
(45) Veröffentlichungstag und Bekanntmachung des Hinweises auf die Patenterteilung: **03.11.2004**
(21) Anmeldenummer: 96117730.0
(22) Anmeldetag: 06.11.1996
(51) Int. Cl.: A23C 9/15, A23C 9/13, A23D 7/015

(54) **Verfahren zur Herstellung eines Fetterzeugnisses mit geringem Fettgehalt**
Process for preparing fat compositions with low fat content
Procédé de préparation de compositions de graisse à basse teneur en graisse

(30) Priorität: 21.12.1995 DE 19547866
(43) Veröffentlichungstag der Anmeldung: 25.06.1997
(73) Patentinhaber: WESTFALIA SEPARATOR AG, 59302 Oelde (DE)
(72) Erfinder: Bücker, Helmut, 59329 Wadersloh-Diestedde (DE); Hüllmann, Markus, Dipl.-Ing., 33605 Bielefeld (DE); Bahnsen, Boy-Heinrich, 24568 Kaltenkirchen (DE)
(74) Vertreter: Stracke, Alexander, Dipl.-Ing.

(56) Entgegenhaltungen:
- DE-A- 2 033 386
- DE-A- 2 300 663
- DE-A- 3 324 821
- FR-A- 1 083 608
- GB-A- 2 207 849
- US-A- 2 719 793
- US-A- 3 962 464
- US-A- 4 177 293
- US-A- 4 534 982
- DATABASE WPI Section Ch, Week 9128 Derwent Publications Ltd., London, GB; Class D13, AN 91-201849 XP002083123 & DK 8 904 404 A (ZUBR J), 16. April 1991

## Beschreibung

Die Erfindung bezieht sich auf ein Verfahren zur Herstellung eins Fetterzeugnisses mit geringem Fettgehalt, das unter Verwendung von Milchinhaltsstoffen im Ausgangsprodukt hergestellt wird und als streichfähiger Tafelaufstrich geeignet ist, wobei das Ausgangsprodukt zur Stabilisierung einer thermischen und mechanischen Behandlung unterzogen wird und eine Geschmacksbeeinflussung durch Fermentation erfährt sowie eine Konzentrationsstufe zur Beeinflussung des Endfettgehaltes durchläuft.

Ein derartiges Verfahren ist beispielsweise aus der EP 0 082 165 B1 bekannt. Bei diesem Verfahren wird der Fettgehalt des Fetterzeugnisses bestimmt durch die Vermischung von Komponenten mit unterschiedlichen Fettgehalten. Zumindest eine dieser Komponenten wurde zuvor durch eine als Ultrafiltrationseinrichtung ausgebildete Konzentrationsstufe aufkonzentriert. Eine Änderung des Fettgehaltes des Fetterzeugnisses bedingt daher die Veränderung des Mischungsverhältnisses der Komponenten und/oder eine Veränderung des Fettgehaltes dieser Komponenten. Derartige Manipulationen sind nicht nur sehr aufwendig, sondern führen auch zu einer anderen Zusammensetzung des Fetterzeugnisses und somit seiner Beschaffenheit. Dieses Verfahren eignet sich daher eher zur Herstellung eines Fetterzeugnisses mit konstantem Fettgehalt. Es ist jedoch häufig erwünscht, Fetterzeugnisse mit sehr unterschiedlichen Fettgehalten auf dem Markt anzubieten, um den sehr unterschiedlichen Verbraucherwünschen gerecht zu werden.

Aus der US-A-4 534 982 ist zudem ein Verfahren der eingangs genannten Art bekannt, bei dem die mechanische Behandlung durch Homogenisation erfolgt und als Konzentrationsstufe eine Zentrifuge verwendet wird, mit der durch Abtrennung von Molke aus dem für 30 min auf 80 °C erhitzten Ausgangsprodukt der Fettgehalt des Fetterzeugnisses eingestellt wird.

In dem Derwent Abstract 91-201 849/28 wird außerdem ein Verfahren beschrieben, bei dem das Ausgangsprodukt ohne mechanische Vorbehandlung bei 10 °C zentrifugiert wird. Bei dieser niedrigen Temperatur bilden sich keine starken hydrophilen Eigenschaften der Proteinfraktionen aus, so daß die Wasserbindungskräfte gering sind. Dadurch kann zwar eine hohe Trockenmasse mit nur 15 % Wasser erreicht werden, aber wegen der geringen Wasserbindungskräfte eben kein niedriger Fettgehalt. Außerdem ist das Produkt wegen der geringen Wasserbindungsfähigkeit sehr wärmesensibel.

Der Erfindung liegt die Aufgabe zugrunde, gegenüber dem Stand der Technik wie er aus der US-A-4 534 982 bekannt ist, das bekannte Verfahren so weiterzubilden, daß sich der Fettgehalt eines Fetterzeugnisses mit hoher Wasserbindungsfähigkeit ohne Veränderung der für das Ausgangsprodukt verwendeten Komponenten sowie deren Mischungsverhältnis unmittelbar auf sehr unterschiedliche, niedrigere Werte einstellen läßt.

Diese Aufgabe wird durch den Gegenstand des Anspruches 1 gelöst.

Durch die Homogenisierung in zwei Stufen erfolgt eine besonders einheitliche Partikelgrößenverteilung, insbesondere des Fettes und des Eiweißes. Durch die dadurch verbundene größere Gesamtpartikeloberfläche wird eine bessere und stabilere Wasserbindung des Endproduktes erreicht. Dadurch wird auch die Haltbarkeit des Endproduktes verlängert.

Durch die Zentrifugierung des Ausgangsproduktes bei hoher Temperatur wird die Wasserbindungsfähigkeit noch verbessert. Dies ermöglicht die Herstellung eines stabilen Endproduktes mit hohem Wasseranteil, d. h. geringem Fettgehalt. Wegen der hohen Wasserbindungskräfte ist auch kein Kristallisationstank wie beim bekannten Verfahren erforderlich. Außerdem wird beim gegenständlichen Verfahren durch die hohe Separierungstemperatur eine geringere Viskosität des Ausgangsproduktes bewirkt, wodurch der Separierungseffekt verbessert wird. Durch die hohe Wasserbindungsfähigkeit können darüber hinaus durch entsprechende Einstellungen der Zentrifuge auf einfache Weise stabile Fetterzeugnisse mit sehr unterschiedlichem Fettgehalt hergestellt werden.

Mit der Zentrifuge lassen sich durch einfache Veränderung des Ablaufdruckes am Molkeablauf der Zentrifuge die Menge der aus dem Ausgangsprodukt abgetrennten Molke und damit der Fettgehalt und die Textur des so erstellten Fetterzeugnisses individuell und flexibel regeln.

Vorteilhafte Ausgestaltungen der Erfindung sind in den Unteransprüchen wiedergegeben.

Ein Ausführungsbeispiel der Erfindung ist in der Zeichnung dargestellt und wird nachstehend näher erläutert.

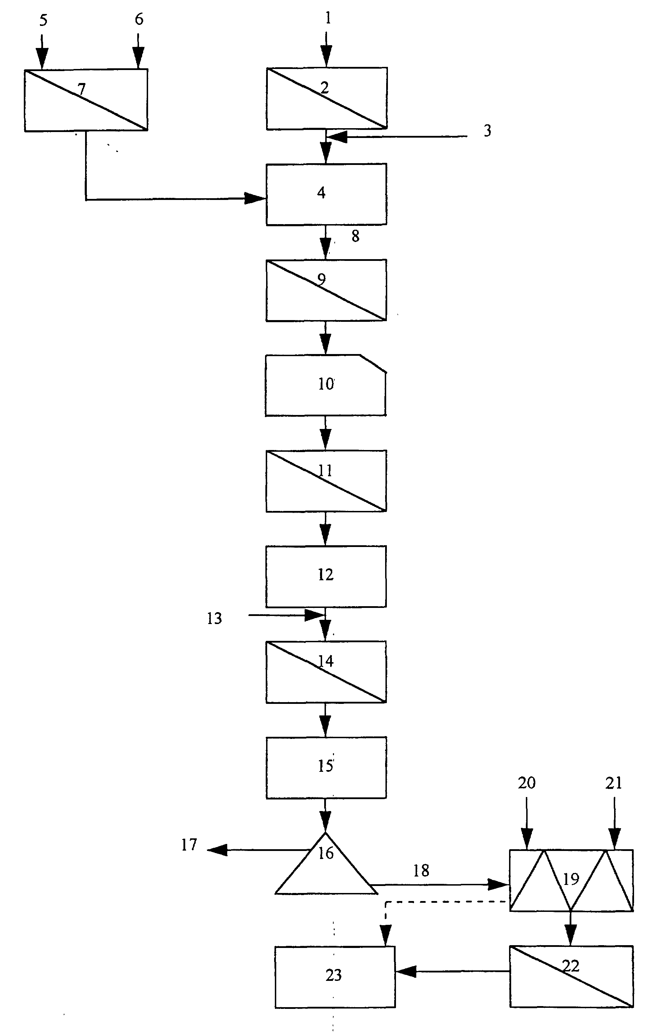

Mit 1 ist in der Fig. 1 Magermilch bezeichnet, die nach Passieren eines Erhitzer 2 mit Milchproteinen 3 vermischt und in einen Mischtank 4 geleitet wird. Rahm 5 und Pflanzenöl 6 werden über einen Erhitzer 7 ebenfalls in den Mischtank 4 geleitet, um ein Ausgangsprodukt 8 zu erzeugen, das über einen Erhitzer 9 einem Homogenisator 10 zugeführt wird. Vom Homogenisator 10 gelangt das Ausgangsprodukt 8 über eine Kühleinrichtung 11 in einen Fermenter 12, dem Kulturen 13 zugeführt werden. Nach Passieren eines weiteren Erhitzers 14 und einer Entgasungsvorrichtung 15 erfolgt in einer Zentrifuge 16 eine Auftrennung des Ausgangsproduktes 8 in Molke 17 und ein Fetterzeugnis 18, dem im Mischer 19 Aroma 20 und Salz 21 zugesetzt wird, und danach optional eine Kühleinrichtung 22 durchläuft und anschließend einer Verpackungseinrichtung 23 zugeführt wird.

Zunächst werden der im Erhitzer 2 auf 30 °C erwärmten Magermilch 1 die Milchproteine 3 zugegeben. Dieses Gemisch wird anschließend mit vollständig desodoriertem Pflanzenöl 6 und Rahm 5, die beide im Erhitzer 7 ebenfalls auf 30 °C erwärmt wurden, im Mischtank 4 zu dem Ausgangsprodukt 8 vermischt. Bei der Temperatur von 30 °C besitzen die Milchproteine 3 optimale Lösungseigenschaften.

Zunächst werden etwa 50% der erforderlichen Magermilchmenge im Mischtank 4 vorgelegt, wobei kontinuierlich die entsprechenden Mengen der Milchproteine 3 zudosiert werden. Anschließend wird zunächst das Pflanzenöl 6 und danach der Rahm 5 dazugefördert. Der Anteil Pflanzenöl 6 wird so gewählt, das dessen Fettanteil im Fetterzeugnis 18 maximal 85% beträgt. Um einen optimalen Geschmack und Geruch des Fetterzeugnisses zu erzielen wird jedoch empfohlen, den Fettanteil des Pflanzenöls 6 auf 60 bis 70% zu beschränken. Sind die oben aufgeführten Produkte im Mischtank 4 vorgelegt, so werden dem Mischtank 4 die restlichen 50% der Magermilch zugegeben.
Das so gebildete Ausgangsprodukt 8 wird nach Erhitzung auf 60 °C im Erhitzer 9 im Homogenisator 10 in einer ersten Stufe bei 175 bar und einer zweiten Stufe bei 40 bar homogenisiert. Anschließend wird das Ausgangsprodukt 8 in der Kühleinrichtung 11 auf die optimale Bebrütungstemperatur von 30 °C abgekühlt und dann in den Fermenter 12 geleitet, dem die Kultur 13 zugegeben wird. Es wird in einer Konzentration von etwa 2 kg pro 20000 kg Ansatz Joghurtkultur bestehend aus den Stämmen Lactobacillus bulgaricus und Streptococcus thermophilus als Direktstarter zur Beimpfung verwendet. Die empfohlene Fermentationstemperatur beträgt 30 °C, wobei das Ausgangsprodukt 8 nach 12- bis 16-stündiger Reifezeit (Säuerung) optimalerweise ein pH-Wert von 4,6 erreicht. Die Joghurtkultur zeigt hier gegenüber einer sonst üblicherweise verwendeten Buttereikultur zwar nicht eine so starke Aromabildung in Richtung Butter, hat jedoch den erheblichen Vorteil einer optimalen rheologischen Beschaffenheit des Endproduktes. So ist festzustellen, daß ein mit Buttereikultur gesäuertes Erzeugnis aufgrund der geringeren Viskosität des Koagulats häufig als subjektiv "stumpf" empfunden wird. Dem Fermenter 12 kann auch noch Beta-Karotin zugegeben werden, um dem Fetterzeugnis 18 eine ansprechende Färbung zu geben.
Nach Einstellung der Separierungstemperatur von 80 °C mittels Erhitzer 14 kann das Ausgangsprodukt 8 dann durch die Zentrifuge 16 in Molke 17 und das Fetterzeugnis 18 aufgetrennt werden. Das Volumen der abgetrennten Molke 17 und damit der Fettgehalt des Fetterzeugnisses 18 lassen sich durch Einstellung des Ablaufdruckes der Molke 17 sehr einfach variieren. Das Fetterzeugnis 18 wird im Mischer 19 mit Aroma 20 und Salz 21 vermischt und anschließend entweder bei einer Temperatur von ca. 80 °C oder nach Durchlauf der Kühleinrichtung 22 bei ca. 15 °C mittels Verpackungseinrichtung 23 abgepackt.

Eine Separierung bei einer Temperatur von etwa 80 °C hat neben einer zusätzlichen hygienischen Sicherheit den Vorteil einer geringeren Viskosität und damit besseren Trennung im Separator. Desweiteren wird durch eine thermische Behandlung in diesem Temperaturbereich eine gezielte Molkenproteindenaturierung hervorgerufen, die zur Konsistenzverbesserung im Endprodukt führt.
Um ein hinsichtlich der sensorischen Eigenschaften optimiertes Streichfett als Tafelaufstrich zu erhalten, wird empfohlen, nach der Trennung im Separator kontinuierlich über geeignete Dosiervorrichtung Mikrosalz in einer Konzentration von max. 1% und Aromakomponenten in Flüssigform zuzusetzen. Diese kontinuierliche Arbeitsweise hat den Vorteil einer guten Vermischung mit dem Produkt. Darüber hinaus entfaltet das Aromenkonzentrat bei steigender Temperatur vermehrt aromawirksame Komponenten. Eine Salzzugabe hat über die sich qualitätsverbessernd auswirkenden Geschmacksparameter im Endprodukt hinaus den Effekt, daß weniger freies Wasser zum Verstoffwechseln der Mikroorganismen zu Verfügung steht.

Das Fetterzeugnis 18 läßt sich auch ausschließlich aus Rahm 5 herstellen, der nach Erwärmung auf 30 °C im Erhitzer 7 und Rühren im Mischtank 4 als Ausgangsprodukt 8 dieselben Verfahrenschritte durchläuft, wie sie oben beschrieben sind.

Mit dem erfindungsgemäßen Verfahren ist ein Streichfett herstellbar, daß neben einem prozeßtechnisch zu steuernden Fettgehalt auch hinsichtlich des Eiweißgehaltes standardisierbar ist, und zwar durch den Einsatz der Zentrifuge.

Es sind zwar Streichfette bekannt, die fettgehaltsseitig unterhalb von Butter und oberhalb von gesäuertem Rahm liegen, jedoch sind diese Produkte im allgemeinen ausschließlich hinsichtlich des Fettgehaltes standardisiert.

## Patentansprüche

1. Verfahren zur Herstellung eines Fetterzeugnisses mit geringem Fettgehalt, das unter Verwendung von Milchinhaltsstoffen im Ausgangsprodukt hergestellt wird und als streichfähiger Tafelaufstrich geeignet ist, wobei das Ausgangsprodukt zur Stabilisierung einer thermischen und mechanischen Behandlung unterzogen wird und eine Geschmacksbeeinflussung durch Fermentation erfährt sowie dann eine Konzentrationsstufe zur Einstellung des Endfettgehaltes durchläuft, wobei die mechanische Behandlung durch Homogenisation in zwei Stufen erfolgt und dann als Konzentrationsstufe eine Zentrifuge verwendet wird, mit der durch Abtrennung von Molke aus dem auf 70 bis 80 °C erhitzten Ausgangsprodukt der Fettgehalt des Fetterzeugnisses eingestellt wird.

2. Verfahren nach Anspruch 1, **dadurch gekennzeichnet, daß** als Ausgangsprodukt Rahm verwendet wird.

3. Verfahren nach Anspruch 1 oder 2, **dadurch gekennzeichnet, daß** der Fettgehalt des Rahmes höchstens 45 % beträgt.

4. Verfahren nach Anspruch 1 oder 2, **dadurch gekennzeichnet, daß** der Fettgehalt des Rahmes mindestens 10 % beträgt.

5. Verfahren nach Anspruch 1 oder 2, **dadurch gekennzeichnet, daß** der Fettgehalt des Rahmes 30 % beträgt.

6. Verfahren nach einem Ansprüche 1 bis 5, **dadurch gekennzeichnet, daß** dem Rahm Pflanzenöl zugemischt wird.

7. Verfahren nach Anspruch 6, **dadurch gekennzeichnet, daß** als Pflanzenöl desodoriertes Speiseöl verwendet wird.

8. Verfahren nach Anspruch 6, **dadurch gekennzeichnet, daß** als Pflanzenöl Sonnenblumenöl verwendet wird.

9. Verfahren nach einem der Ansprüche 6 bis 9, **dadurch gekennzeichnet, daß** dem Rahm/Pflanzenöl-Gemisch Magermilch zugegeben wird.

10. Verfahren nach Anspruch 9, **dadurch gekennzeichnet, daß** der Magermilch vor der Vermischung mit dem Rahm/Pflanzenöl-Gemisch Milchproteine zugegeben werden.

11. Verfahren nach einem der Ansprüche 1 bis 10, **dadurch gekennzeichnet, daß** die Bestandteile des Ausgangsprodukts vor dem Vermischen auf mindestens 30 °C erwärmt werden.

12. Verfahren nach einem der Ansprüche 1 bis 11, **dadurch gekennzeichnet, daß** in der ersten Stufe bei 175 bar und in der zweiten Stufe bei 40 bar homogenisiert wird.

13. Verfahren nach einem der Ansprüche 1 bis 12, **dadurch gekennzeichnet, daß** das Fetterzeugnis mit Aroma und Salz vermischt wird.

14. Verfahren nach einem der Ansprüche 1 bis 13, **dadurch gekennzeichnet, daß** das Fetterzeugnis mit einer Temperatur von 65 bis 75 °C abgefüllt wird.

15. Verfahren nach einem der Ansprüche 1 bis 14, **dadurch gekennzeichnet, daß** das Fetterzeugnis vor dem Abfüllen auf mindestens 15 °C abgekühlt wird.

16. Verfahren nach einem der Ansprüche 1 bis 15, **dadurch gekennzeichnet, daß** das Fetterzeugnis einen Trockenmassegehalt von 45 bis 55 % besitzt.

17. Verfahren nach einem der Ansprüche 1 bis 16, **dadurch gekennzeichnet, daß** das Fetterzeugnis einen Fettgehalt von 35 bis 45 % besitzt.

## Claims

1. Process for producing a fat product of low fat content which is produced using milk constituents in the starting product and is suitable as a spreadable table spread, the starting product being subjected to a thermal and mechanical treatment for stabilization and experiencing flavour influence by fermentation, and also then passing through a concentration stage to set the final fat content, the mechanical treatment being performed by homogenization in two stages and then as concentration stage a centrifuge being used, by which, by separating off whey from the starting product heated to 70 to 80°C, the fat content of the fat product is set.

2. Process according to Claim 1, **characterized in that** the starting product is cream.

3. Process according to Claim 1 or 2, **characterized in that** the fat content of the cream is at most 45%.

4. Process according to Claim 1 or 2, **characterized in that** the fat content of the cream is at least 10%.

5. Process according to Claim 1 or 2, **characterized in that** the fat content of the cream is 30%.

6. Process according to one of Claims 1 to 5, **characterized in that** vegetable oil is admixed to the cream.

7. Process according to Claim 6, **characterized in that** the vegetable oil is deodorized edible oil.

8. Process according to Claim 6, **characterized in that** the vegetable oil is sunflower oil.

9. Process according to one of Claims 6 to 9, **characterized in that** skimmed milk is added to the cream/vegetable oil mixture.

10. Process according to Claim 9, **characterized in that** milk proteins are added to the skimmed milk before it is mixed with the cream/vegetable oil mixture.

11. Process according to one of Claims 1 to 10, **characterized in that** the constituents of the starting product are heated before mixing to at least 30°C.

12. Process according to one of Claims 1 to 11, **characterized in that** homogenization is performed in the first stage at 175 bar and in the second stage at 40 bar.

13. Process according to one of Claims 1 to 12, **characterized in that** the fat product is mixed with flavouring and salt.

14. Process according to one of Claims 1 to 13, **characterized in that** the fat product is packaged at a temperature of 65 to 75°C.

15. Process according to one of Claims 1 to 14, **characterized in that** the fat product is cooled to at least 15°C before packaging.

16. Process according to one of Claims 1 to 15, **characterized in that** the fat product has a dry matter content of 45 to 55%.

17. Process according to one of Claims 1 to 16, **characterized in that** the fat product has a fat content of 35 to 45%.

## Revendications

1. Procédé de préparation d'une composition de graisse à basse teneur en graisse, qui est préparée en utilisant des ingrédients lactés dans le produit d'origine et qui est appropriée à titre de beurre de table pouvant être tartine, le produit d'origine pour la stabilisation étant soumis à un traitement thermique et mécanique et modifiant le goût par fermentation ainsi que passant par une étape de concentration pour l'ajustement de la teneur en graisse, le traitement mécanique s'effectuant par homogénéisation en deux étapes et puis une centrifugeuse étant utilisée comme étape de concentration, grâce à laquelle la teneur en graisse de la composition de graisse est ajustée par séparation du petit lait du produit de départ chauffé entre 70 et 80°C.

2. Procédé selon la revendication 1, **caractérisé en ce que** l'on utilise de la crème comme produit de départ.

3. Procédé selon la revendication 1 ou 2, **caractérisé en ce que** la teneur en graisse de la crème atteint au maximum 46 %.

4. Procédé selon la revendication 1 ou 2, **caractérisé en ce que** la teneur en graisse de la crème atteint au moins 10 %.

5. Procédé selon la revendication 1 ou 2, **caractérisé en ce que** la teneur en graisse de la crème atteint 30 %.

6. Procédé selon l'une des revendications 1 à 5, **caractérisé en ce que** de l'huile végétale est mélangée à la crème.

7. Procédé selon la revendication 6, **caractérisé en ce que** l'on utilise de l'hune de table désodorisée à titre d'huile végétale.

8. Procédé selon la revendication 6, **caractérisé en ce que** l'on utilise de l'huile de tournesol à titre d'huile végétale.

9. Procédé selon l'une des revendications 6 à 9, **caractérisé en ce que** l'on ajoute du lait écrémé au mélange de crème / huile végétale.

10. Procédé selon la revendication 9, **caractérisé en ce que** l'on ajouté des protéines de lait au lait écrémé avant le mélange avec le mélange crème / huile végétale.

11. Procédé selon l'une des revendications 1 à 10, **caractérisé en ce que** les composants du produit de départ sont chauffés à au moins 30°C avant le mélange.

12. Procédé selon l'une des revendications 1 à 11, **caractérisé en ce que** l'on homogénéise dans la première étape à 175 bars et dans la deuxième étape à 40 bars.

13. Procédé selon l'une des revendications 1 à 12, **caractérisé en ce que** la composition de graisse est mélangée avec des arômes et du sel.

14. Procédé selon l'une des revendications 1 à 13, **caractérisé en ce que** la composition de graisse est remplie à une température de 65 à 75°C.

15. Procédé selon l'une des revendications 1 à 14, **caractérisé en ce que** la composition de graisse est refroidie à au moins 15°C avant le remplissage.

16. Procédé selon l'une des revendications 1 à 15, **caractérisé en ce que** la composition de graisse possède une teneur en matière sèche de 46 à 55 %.

17. Procédé selon l'une des revendications 1 à 16, **caractérisé en ce que** la composition de graisse possède une teneur en graisse de 35 à 45 %.
